**Europäisches Patentamt**

**European Patent Office**

**Office européen des brevets**

(19)

(11) Veröffentlichungsnummer: **0 346 725 B1**

## EUROPÄISCHE PATENTSCHRIFT

(12)

(45) Veröffentlichungstag der Patentschrift: **19.11.92**

(51) Int. Cl.5: **A01D 25/04**, A01D 27/04, A01D 33/08

(21) Anmeldenummer: **89110179.2**

(22) Anmeldetag: **06.06.89**

(54) **Maschine zum Ernten von Wurzelfrüchten, insbesondere Zuckerrüben.**

(30) Priorität: **15.06.88 DE 3820377**
**23.03.89 DE 3909652**

(43) Veröffentlichungstag der Anmeldung:
**20.12.89 Patentblatt 89/51**

(45) Bekanntmachung des Hinweises auf die
Patenterteilung:
**19.11.92 Patentblatt 92/47**

(84) Benannte Vertragsstaaten:
**BE DE ES FR GB IT NL SE**

(56) Entgegenhaltungen:
**DE-A- 2 139 913**
**DE-A- 2 526 341**
**DE-A- 2 552 757**
**DE-A- 2 612 025**
**DE-C- 2 721 125**

(73) Patentinhaber: **Franz Kleine Maschinenfabrik
GmbH & Co.
Ferdinand-Henze-Strasse 2
W-4796 Salzkotten(DE)**

(72) Erfinder: **Helle, Johannes
Nikolausstrasse 15**
**W-4793 Büren(DE)**
Erfinder: **Plückebaum, Heinz
Lindenweg 25**
**W-4796 Salzkotten-Upsprunge(DE)**
Erfinder: **Riecken, Jürgen
Tiefer Weg 6**
**W-4796 Salzkotten-Upsprunge(DE)**
Erfinder: **Barkhausen, Johannes
Tiefer Weg 8**
**W-4796 Salzkotten-Upsprunge(DE)**
Erfinder: **Syring, Klemens
Bachstrasse 5**
**W-4796 Salzkotten-Thüle(DE)**
Erfinder: **Romberg, Heinz Werner, Dipl.-Ing.
Görresstrasse 35**
**W-4780 Lippstadt(DE)**

(74) Vertreter: **Rehberg, Elmar, Dipl.-Ing.
Postfach 3162 Am Kirschberge 22**
**W-3400 Göttingen(DE)**

EP 0 346 725 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung bezieht sich auf eine Maschine zum Ernten von Wurzelfrüchten, insbesondere Zukkerrüben, mit mindestens einem Rodeschar und mit einer nachgeschalteten Reinigungseinrichtung, so daß die vom Rodeschar ausgehobenen Rüben durch die Reinigungseinrichtung von Erde gereinigt und dabei gefördert werden. Die Maschine kann ein- oder mehrreihig arbeitend ausgebildet sein. Sie kann als Aggregat Bestandteil von Rübenerntemaschinen sein, die ansonsten in üblicher Weise ausgebildet sind.

Eine solche Maschine ist aus der DE-C-27 21 125 bekannt. Bei dieser mehrreihig, insbesondere 6-reihig ausgebildeten Rübenerntemaschine sind als Reinigungseinrichtung ein den Rodescharen nachgeordnetes Bett aus mit ihren Achsen quer zur Fahrtrichtung angeordneten Reinigungswalzen vorgesehen, wobei die Reinigungswalzen die von den Rodescharen ausgehobenen Rüben von Erde reinigen und dabei entgegengesetzt zur Fahrt-bzw. Arbeitsrichtung fördern. Die Reinigungswalzen erfassen dabei immer die Rüben von mehreren Rodescharen bzw. Reihen und leiten die Rüben während der Reinigung durch Zusammenziehen derart, daß sie im Schwad verdichtet abgelegt werden können. Diese Reinigungswalzen erbringen eine gute Reinigungswirkung insbesondere dadurch, daß die von den Rodescharen ausgehobene Erde durch die Spalte zwischen den Reinigungswalzen herabfällt, während die Rüben in einem lockeren, gleichmäßigen Strom mit geringer Beschädigungswirkung auf den Reinigungswalzen gefördert werden. Je länger dieses Bett aus Reinigungswalzen ist, also je mehr Reinigungswalzen hintereinander angeordnet sind, desto besser wird die Reinigungswirkung. Allerdings erhöht sich damit auch das Gewicht der Maschine, die Ausladung und der Aufwand für den Antrieb dieser Reinigungswalzen.

Insbesondere bei ungünstigen Erntebedingungen ist jedoch die Reinigungswirkung trotzdem oft nicht ausreichend, insbesondere dann, wenn ein Teil der Erde an den Rüben stark haftet. Die Arbeit der Reinigungswalzen gestaltet sich dann so, daß zwar ein Großteil der von den Rodescharen ausgehobenen Erde abgetrennt wird, daß aber die Reinigungswirkung bezüglich der den Rüben anhaftenden Erde nicht sonderlich gut ist.

Aus der DE-A-25 52 757 ist eine Rodeeinrichtung an ein- oder mehrreihigen Rübenerntemaschinen bekannt, bei der schwingend angetriebene Rodekörper zum Ausheben der Rüben angewendet werden. An den Rodekörpern sind Siebstäbe befestigt. Oberhalb der Rodekörper und im Bereich der Siebstäbe sind Mitnehmer aufweisende Mitnehmerräder vorgesehen, die so angetrieben werden, daß die Rüben durch die Mitnehmer des Mitnehmerrads hin- und hergeworfen, dabei gereinigt und auf kurzem Weg auf eine Höhe gegenüber dem Boden gebracht werden, die die Übergabe auf einen sich anschließenden Rübenförderer ermöglicht. Im Bereich oberhalb des sich an die Siebstäbe anschließenden Rübenförderers ist eine Rübenfangfläche vorgesehen, an der Rüben, die durch die Mitnehmer des Mitnehmerrads zu weit hochgeschleudert wurden, anschlagen und dann auf den unterhalb der Rübenfangfläche angeordneten Rübenförderer zurückfallen können. Die Reinigung der Rüben erfolgt somit im Bereich der Siebstäbe und der Mitnehmerräder, während der Rübenfangfläche die Funktion zukommt, einen Teil der Rüben, die zu weit hochgeschleudert wurden, abzubremsen und auf den sich anschließenden Rübenförderer zurückzuführen. Wenn diese einstufige Reinigung der Rüben eine gute Wirkung haben soll, ist es wesentlich, daß die Rüben in dem durch die Siebstäbe gebildeten Kanal von den Mitnehmern der Mitnehmerräder mehrfach erfaßt und hin- und hergeworfen werden.

Aus der DE-A-25 26 341 ist eine Vorrichtung zum Heben von Rüben bekannt, bei der oberhalb der Hubschare ein mit Schüttelelementen besetzter Rotor angeordnet ist, durch den die Rüben über dem Boden quer zur Fahrtrichtung längs einer Zickzackbahn hin- und hergeschüttelt werden, damit die zunächst an den Rüben festklebende und dann losgeschüttelte Erde zwischen den Hubscharen entweichen kann. Auch dabei ist der Rotor den Hubscharen zugeordnet. An die so gebildete Einheit schließt sich ein Förderer an, auf welchem die gereinigten Rüben hinweggefördert werden.

In der nachveröffentlichen DE-A-37 15 139.8 wird eine Maschine zum Ernten von Wurzelfrüchten beschrieben, bei der eine Rode-Reinigereinheit Anwendung findet, bei der oszillierend angetriebene Rodeschare eingesetzt werden. Die Rodeschare sind mit Ableitvorrichtungen versehen, d. h. an den Rodescharen sind - ähnlich den Siebstangen - Leitstangen im Abstand voneinander angebracht, die sich entgegengesetzt zur Fahrt- bzw. Arbeitsrichtung um eine gewisse Strecke leicht nach aufwärts geneigt erstrecken. Der Abstand der Stäbe ist so gewählt, daß die von den Rodescharen ausgehobenen Rüben hier nicht hindurchfallen können. Oberhalb dieser Ableiteinrichtung ist eine Schleuder- und Beschleunigungsvorrichtung angeordnet, die aus mehreren angetriebenen Trommeln bestehen kann, deren Achsen quer zur Fahrtrichtung angeordnet sind. Die Trommeln sind auf ihrem Umfang mit Schaufeln oder anderen Mitnehmern versehen, die die von den Rodescharen ausgehobenen Rüben im Bereich der Ableitvorrichtung erfassen und nach hinten gegen eine Prallwand schleudern. Durch das Auftreffen der Mitnehmer auf den Rüben und die Verzögerung der Rüben an der Prallwand wird die an den Rüben anhaftende Erde aufgebrochen, so daß die entsprechende Reinigungswirkung eintritt. Ein Teil der von den Rodescharen mitausgehobenen Erde fällt auch bereits durch die an den Rodescharen befestigten Ableitvorrichtungen, die infolge des Antriebs der Rodeschare selbst ebenfalls eine entsprechende Rüttelbewegung ausführen. Auf schwierigen Böden kommt es jedoch vor, daß sich die Rüben zwischen den Stäben der Ableitvorrichtung festsetzen. Die Ableitvorrichtung setzt sich dabei mit einem Gemisch aus Erde und Rüben zu und die Mitnehmer der Schleuder- und Beschleunigungsvorrichtung streichen über die Verstopfung hinweg, wobei die Beschleunigungswirkung für diese festgesetzten Rüben natürlich nicht mehr eintritt. Aber auch die nachfolgenden Rüben werden durch dieses Hindernis gebremst und die Beschleunigungswirkung der Schleuder- und Beschleunigungsvorrichtung wird nicht mehr in vollem Maß erreicht. Damit verschlechtert sich auch die Reinigungswirkung und es ergibt sich die Notwendigkeit, den Arbeitsfluß zu unterbrechen und die Ableitvorrichtung zu reinigen, um anschließend die Arbeit wieder aufzunehmen. Derartige Betriebsunterbrechungen sind verständlicherweise unangenehm und aufwendig. Die beschriebene Maschine weist den weiteren Nachteil auf, daß durch die oszillierende Bewegung jedes Rodeschares und jeder Ableitvorrichtung relativ hohe Kräfte auf diese Bauteile einwirken, die im übrigen von dem Maschinenrahmen aufgenommen werden müssen.

Der Erfindung liegt die Aufgabe zugrunde, bei einer Maschine zum Ernten von Wurzelfrüchten, auf möglichst kurzer Strecke und bei möglichst geringer Beschädigung der Rüben eine hohe Reinigungswirkung der Rüben zu erzielen.

Erfindungsgemäß wird dies durch eine Maschine zum Ernten von Wurzelfrüchten, insbesondere Zuckerrüben, mit mindestens einem Rodeschar und mit nachgeschalteten, langsam laufend angetriebenen Reinigungselementen, insbesondere Reinigungswalzen oder Reinigungsbändern, so daß die vom Rodeschar ausgehobenen Rüben auf den Reinigungselementen von Erde gereinigt und dabei gefördert werden, einer oberhalb der angetriebenen Reinigungselemente angeordneten, schnell laufenden Beschleunigungseinrichtung, die den vergleichsweise langsam laufenden Reinigungselementen zugeordnet ist, so daß die auf den Reinigungselementen geförderten Rüben von der Beschleunigungseinrichtung erfaßt und nach hinten abgeschleudert werden, und mit einer über dem Ende der Reinigungselemente oder oberhalb des Bereichs weiterer, sich anschließender Förderelemente angeordneten Prallwand, die die von der Beschleunigungseinrichtung abgeschleuderten Rüben auffängt und dabei verzögert, so daß die an den Rüben anhaftende Erde entfernt wird, wobei die Rüben infolge der Wirkung der Beschleunigungseinrichtung im freien Flug auf die Prallwand gelangen erreicht. Die hinter den Rodescharen gebildete erste Reinigungsstufe weist somit zwei zusammenarbeitende Elemente auf, nämlich einmal die vergleichsweise schnellaufende Beschleunigungseinrichtung und zum anderen die vergleichsweise langsam laufenden Reinigungselemente. Diese beiden Elemente unterstützen einander. Die von dem Rodeschar geförderte Erde fällt durch die Spalte zwischen den Reinigungswalzen hindurch und wird gleichsam vorweg abgeführt, so daß die Beschleunigungseinrichtung und die ihr zugeordnete Prallwand in einer zweiten Reinigungsstufe nur noch die an den Rüben anhaftende Erde zu entfernen haben. Die Beschleunigungseinrichtung und die Prallwand bilden nicht nur die zweite Reinigungsstufe, sondern erfüllen zugleich Förderfunktion, indem die Rüben im freien Flug Höhe gewinnen und an der Prallwand verzögert und abgeleitet werden. Durch die Kombination der beiden Reinigungsstufen wird insgesamt eine überraschend gute Reinigungswirkung erzielt, und zwar auch bei schwierigen Erntebedingungen. Die Reinigereinheit weist eine kurze Baulänge auf, weil es im allgemeinen völlig genügt, z. B. drei oder vier Reinigungswalzen oder ein kurzes Reinigungsband oder auch mehrere kurze Reinigungsbänder hintereinander vorzusehen, wobei die Zuordnung zu der Beschleunigungseinrichtung so gewählt ist, daß die Rüben auch in den Wirkbereich der Mitnehmer an den Rotationskörpern der Beschleunigungseinrichtung gelangen. Da die Reinigungselemente mit den Rodescharen nicht in Verbindung stehen, also unabhängig von diesen angeordnet sind, vereinfacht sich die Ausbildung der Rodeeinheit. Dies bedeutet, daß die Rodeschare unabhängig von der Reinigereinheit ausgebildet und eingesetzt werden können. Hieraus entsteht der weitere Vorteil, daß die Rodeschare nicht oszillierend angetrieben werden müssen, so daß dieser erhebliche Aufwand wegfällt. Natürlich ist es auch möglich, die Reinigungswalzen verschieden breit zu gestalten, um z. B. jeweils zwei Rodeschare nebeneinander mit einer solchen Einheit zu bedienen, also an einer zweireihig arbeitenden Maschine.

Die Prallwand kann über dem Ende der Reinigungselemente angeordnet sein. Damit ergibt sich eine besonders kurze Bauweise der zweistufigen Reinigungseinheit. Es ist aber auch möglich, die Prallwand oberhalb des Bereichs weiterer, sich anschließender Förderelemente anzuordnen. Damit kann die Prallwand insbesondere oberhalb eines Siebrads mit vertikaler Achse angeordnet sein, so daß die zweite Reinigungsstufe aus Beschleunigungseinrichtung und Prallwand nicht nur auch Förderfunktion hat, sondern weiterhin auch dazu genutzt wird, um den Strom der Rüben von dem Reinigungselement der ersten Reinigungsstufe auf ein anderes, sich anschließendes Förderelement zu überführen.

Die Beschleunigungseinrichtung kann vorzugsweise mehrere Rotationskörper aufweisen, die auf ihrem Umfang mit schlegelnden Werkzeugen aus elastischem Material wie Schaufeln, Rohrabschnitten o. dgl. besetzt sind und deren Achsen quer zur Fahrtrichtung angeordnet sind. Die Rotationskörper sind also auf ihrem Umfang und Mitnehmern besetzt, die rohrförmigen oder auch vollen Querschnitt aufweisen können und die mit einer entsprechenden Umfangsgeschwindigkeit angetrieben sind, die wesentlich höher ist als die Umfangsgeschwindigkeit der Reinigungselemente. Trotz dieses Geschwindigkeitsunterschieds werden die Rüben dennoch vergleichsweise schonend ergriffen und behandelt, weil durch die Mitnehmer die Rüben nur noch mit der Differenzgeschwindigkeit der beiden Umfangsgeschwindigkeiten beschleunigt werden müssen. Die Rotationskörper mit den Mitnehmern können dabei so angeordnet werden, daß der erste Rotationskörper mit seinen Mitnehmern in den Bereich zwischen den Rodescharen eingreift und damit bereits platzsparend in Fahrtrichtung angeordnet werden kann. Der zweite Rotationskörper kann in Fahrtrichtung gesehen versetzt zu dem ersten Rotationskörper angeordnet werden, so daß sich die beiden Wirkkreise der Mitnehmer zwar überschneiden können, jedoch die Mitnehmer aneinander vorbeistreichen. Auch dies ergibt eine kurze Bauweise in Fahrt- bzw. Arbeitsrichtung.

Als Reinigungselemente können insbesondere Reinigungswlazen oder Reinigungsbänder vorgesehen sein, die mit ihren angetriebenen Achsen parallel zueinander und quer zur Fahrtrichtung angeordnet sind. Aber auch ein Teil eines Siebrands kann das Reinigungselement bilden.

Zumindest einige der Reinigungswalzen können auf ihrem Umfang mit Wendeln oder anderen Aufbauten versehen sein, die relativ zu der Anordnungsstelle der Beschleunigungseinrichtung so ausgebildet und angeordnet sind, daß sie die ausgehobenen Rüben in den Erfassungsbereich der Beschleunigungseinrichtung leiten. Die Reinigungswalzen dienen damit nicht nur der Trennung von ausgehobener Erde, sondern sie besitzen zugleich die Aufgabe, die Rüben den Mitnehmern der Beschleunigungseinrichtung zuzuleiten, so daß diese verläßlich von der Beschleunigungseinrichtung erfaßt werden.

Die Reinigungselemente können auch aus elastischem Werkstoff wie z. B. Gummi bestehen oder zumindest in ihrer Oberfläche derart ausgebildet sein. Auch hierbei geht es um die schonende Behandlung der Rüben. So ist es beispielsweise möglich, die Reinigungswalzen mit Naben aus Stahl auszustatten und entsprechende Rohrstücke aus Gummi oder Kunststoff über diese Naben zu schieben. Auch die Wendeln oder die anderen fördernden Aufbauten auf der Oberfläche der Reinigungswalzen können aus diesem elastischen Material bestehen.

Es ist auch möglich, daß die einzelnen Reinigungswalzen mit gegeneinander unterschiedlicher, insbesondere in Förderrichtung steigender Umfangsgeschwindigkeit angetrieben sind. Dies ist in einfacher Weise möglich, wenn entsprechend unterschiedliche Zahnräder in dem Antriebsstrang zu den Reinigungswalzen Verwendung finden und/oder die Reinigungswalzen unterschiedliche Außendurchmesser aufweisen.

Zusätzlich kann die Arbeitsgeschwindigkeit der Rotationskörper der Beschleunigungseinrichtung und/oder die Umfangsgeschwindigkeit der Reinigungselemente einzeln oder gemeinsam einstellbar sein. Damit ist es möglich, den Reinigungsgrad einzustellen. Auch eine Anpassung an die Erntebedingungen ist dabei möglich Die Reinigungselemente und/oder die Rotationskörper der Beschleunigungseinrichtung können mechanisch oder hydraulisch, beispielsweise durch einen oder mehrere Ölmotore, angetrieben sein. Auch dies kann bereits in Abhängigkeit zueinander geschehen.

Die Reinigungselemente können in einem Trägergehäuse gelagert sein, wobei diese so gebildete Einheit vertikal und/oder horizontal verstellbar angeordnet ist. Diese Verstellbarkeit zielt auf die räumliche Zuordnung der Beschleunigungseinheit zu den Rotationskörpern bzw. deren Mitnehmern ab und verändert damit den Zeitpunkt, ab welchem die Rüben in den Wirkbereich der Beschleunigungseinrichtung gelangen. Auf diese Weise ist ebenfalls eine Anpassung an die Erntebedingungen möglich. Auf einem steinigen Feld wird beispielsweise die Einheit der Reinigungselemente vergleichsweise hoch eingestellt. Auch eine Anpassung an den Wuchs der Rüben ist hiermit möglich.

Der Antrieb der Rotationskörper der Beschleunigungseinheit kann mit dem Antrieb der Reinigungselemente über eine Getriebestufe gekoppelt sein, so daß die jeweiligen Umfangsgeschwindigkeiten immer in einem bestimmten Verhältnis zueinander stehen, obwohl es auch dabei natürlich möglich ist, eine Einstellung oder Verstellung der Geschwindigkeiten vorzusehen.

Zumindest ein Teil der Beschleunigungseinrichtung und der Reinigungselemente kann von durchbrochenen, sich in Fahrtrichtung erstreckenden Seitenwänden umgeben sein, damit von der Beschleunigungseinrichtung seitlich abgeschleuderte Rüben nicht verlorengehen, sondern in den Bereich der Reinigungselemente herabfallen, so daß sie im Förderstrom verbleiben.

Die Erfindung wird anhand bevorzugter Ausführungsbeispiele weiter erläutert und beschrieben. Es zeigen:

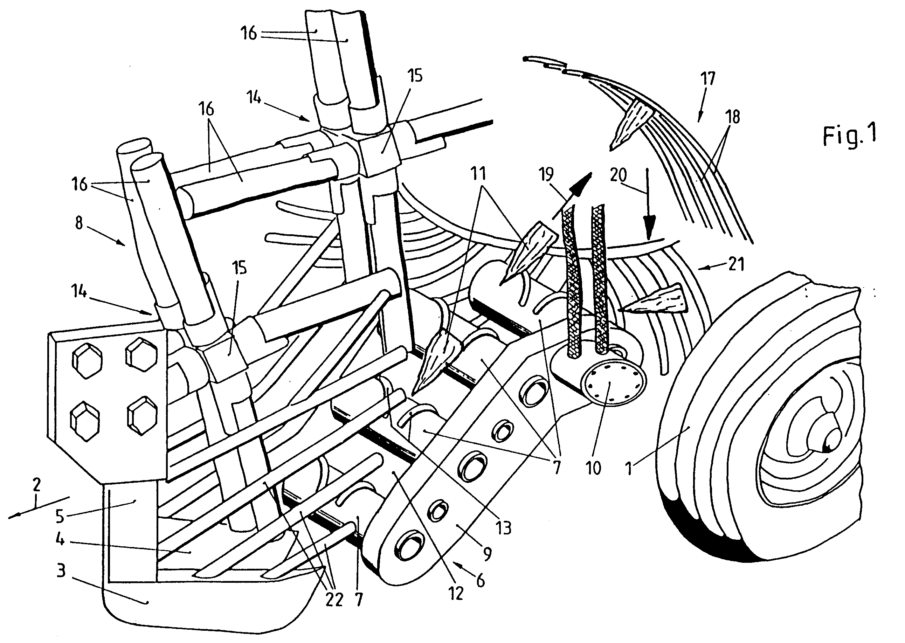

Figur 1    eine perspektivische Darstellung der für die Erfindung wesentlichen Teile in einer ersten Ausführungsform und

Figur 2    eine perspektivische Darstellung der für die Erfindung wesentlichen Teile in einer zweiten Ausführungsform.

Von der Maschine ist zunächst ein Rad 1 dargestellt, um die Fahrt- bzw. Arbeitsrichtung gemäß Pfeil 2 anzudeuten bzw. erkennbar zu machen. Rodeschare 3, 4 sind in der üblichen V-förmigen Zuordnung zueinander an Scharstielen 5 aufgehängt und letztlich an dem nicht-dargestellten Maschinenrahmen gelagert. Die Rodeschare 3, 4 dienen dazu, die vorher geköpften und geputzten Rüben aus der Erde auszuheben.

Hinter dem Ende der Rodeschare 3, 4 entgegengesetzt zur Arbeitsrichtung gemäß Pfeil 2 schließt sich eine Reinigungseinheit 6 an, die zwei wesentliche Elemente aufweist, nämlich einmal ein Reinigungselement in Form eines Betts aus Reinigungswalzen 7 und zum anderen eine Beschleunigungseinrichtung 8. Auch die Reinigungswalzen 7 und die Beschleunigungseinrichtung 8 sind einander zugeordnet. Die Reinigungswalzen 7 sind mit ihren Achsen quer zur Arbeitsrichtung gemäß Pfeil 2 angeordnet. Sie sind in beidendig vorgesehenen Trägergehäusen 9 gelagert. Die Trägergehäuse 9 können entgegengesetzt zur Arbeitsrichtung gemäß Pfeil 2 leicht ansteigend vorgesehen sein oder auch, wie dargestellt, abgeknickt gestaltet sein. In dem Trägergehäuse 9 kann auch der Antrieb der einzelnen Reinigungswalzen 7 vorgesehen sein, beispielsweise mit einem Zahnradzug. Der eigentliche Antrieb kann über einen Ölmotor 10 auf die Reinigungswalzen 7 übertragen werden. Die Reinigungswalzen 7 sind in einem solchen Abstand voneinander angeordnet, daß die Rüben 11 nicht durch die zwischen den Reinigungswalzen 7 gebildeten Spalte 12 hindurchfallen können, sondern locker und mit ruhigem Fluß über die Oberfläche der Reinigungswalzen 7 gefördert werden. Auf der Oberfläche der Reinigungswalzen 7 sind Wendel 13 angeordnet, die auf die Rüben 11 nicht nur eine entgegengesetzt zur Fahrtrichtung 2 wirkende Förderwirkung besitzen, sondern auch eine Kraftkomponente quer dazu auf die Rüben ausüben, so daß die Rüben 11 gezielt über die Breite bewegt werden. Damit können die Rüben 11 gezielt in den Wirkbereich der Beschleunigungseinrichtung 8 eingebracht werden.

Die Beschleunigungseinrichtung 8 weist zweckmäßig mehrere Rotationskörper 14 auf, die in Fahrtrichtung hintereinander, jedoch seitlich versetzt, angeordnet sein können, um eine kurze Bauweise zu ermöglichen. Der Rotationskörper 14 besitzt eine Nabe 15 und ist um je eine quer zur Fahrtrichtung sich erstreckende Achse drehbar. Die Achsen der Naben 15 sind damit parallel zu den Achsen der Reinigungswalzen 7. Die Naben 15 sind mit sich radial erstreckenden schlegelnden Werkzeugen 16 besetzt, die aus elastischem Material bestehen, beispielsweise Gummi oder Kunststoff. Sie können als Vollmaterial oder auch als Schlauchabschnitte ausgebildet sein oder auch Schaufelform o. dgl. aufweisen. Die Rotationskörper 14 der Beschleunigungseinrichtung 8 werden schnellaufend angetrieben, jedenfalls erheblich schneller als die Reinigungswalzen 7. Auch die Reinigungswalzen 7 bzw. zumindest deren Oberfläche kann aus Gummi oder Kunststoff bestehen, um die Rüben 11 schonend zu behandeln.

Aus der Darstellung ist ersichtlich, daß der in Fahrtrichtung gemäß Pfeil 2 vorderste Rotationskörper 14 mit seinen Werkzeugen 16 in den Spalt zwischen den beiden Rodescharen 3 und 4 bzw. über diesem Spalt angeordnet ist, so daß hier die Rüben 11 in der Vertikalmittelebene bereits zu einem sehr frühen Zeitpunkt erfaßt werden können. Der zweite Rotationskörper 14 ist seitlich dazu etwas versetzt angeordnet, damit die schlegelnden Werkzeuge 16 der beiden Rotationskörper 14 aneinander vorbeistreichen können. Die Beschleunigungseinrichtung 8 ist damit aber oberhalb der Reinigungswalzen 7 und in Zuordnung zu dieser angeordnet. Es können auch mehr als zwei Rotationskörper 14 vorgesehen sein.

In Zuordnung zu der Beschleunigungseinrichtung 8 ist eine Prallwand 17 aus einzelnen Stäben 18 ortsfest am nicht dargestellten Maschinenrahmen gelagert. Die Stäbe 18 sind auf Abstand zueinander angeordnet und können eine gebogene Form aufweisen. Sie dienen dazu, die von der Beschleunigungseinrichtung 8 erfaßten und nach hinten abgeschleuderten Rüben aufzufangen und dabei zu verzögern, so daß die an den Rüben anhaftende Erde aufgebrochen und damit von den Rüben entfernt wird. Die Rüben 11 gelangen also, nachdem sie auf dem Anfang der Reinigungseinheit 6 aufgenommen und sodann von der Beschleunigungseinrichtung 8 erfaßt wurden, im freien Flug infolge der Wirkung der Beschleunigungseinrichtung 8 gemäß Pfeil 19 auf die Prallwand 17 und fallen zusammen mit der abgelösten Erde gemäß Pfeil 20 in den Bereich einer weiteren Fördereinrichtung, beispielsweise eines Siebrads 21. Es ist aber auch möglich, die Anzahl der Reinigungswalzen 7 etwas zu erhöhen bzw die Prallwand 17 im Endbereich der Reinigungseinheit 6 anzuordnen, so daß sie von der Prallwand 17 wiederum auf die Reinigungswalzen 7 im Endbereich herabfallen. Zwischen dem unteren Ende der Stäbe 18 und den Reinigungswalzen ist dann ein entsprechender Durchtrittsspalt gebildet, so daß die gereinigten Rüben hier hinweggefördert werden können.

Die Wirkungsweise dieser Maschine ist folgende:

Durch die Rodeschare 3 und 4 werden die Rüben 11 einschließlich Erde ausgehoben und gelangen auf die erste Reinigungswalze 7, die unmittelbar hinter dem Ende der Rodeschare 3 und 4 angeordnet ist. Die Reinigungswalzen 7 sind langsamlaufend angetrieben, so daß ein Großteil der mit ausgehobenen Erde bereits durch die Spalte 12 nach unten fällt, bevor die Rüben mit den Werkzeugen 16 der Beschleunigungseinrichtung 8 in Kontakt kommen. Durch die Wendel 13 können die Rüben 11 seitlich geführt und so gefördert werden, daß sie letztendlich von den Werkzeugen 16 mit erheblich höherer Umfangsgeschwindigkeit erfaßt und nach hinten abgeschleudert werden. Sie fliegen dann auf die Prallwand 17, so daß durch den Kontakt mit den Werkzeugen 16 und der Prallwand 17 die unmittelbar an der Rübe 11 anhaftende und diese möglicherweise teilweise umschließende Erde aufgebrochen wird. Die Erde an der Rübe wird also im wesentlichen von der Beschleunigungseinrichtung 8 mit Prallwand 17 entfernt. Überraschenderweise ergänzen sich diese beiden Reinigungselemente in hervorragender Weise zueinander. Selbst bei schwierigen Erntebedingungen tritt ein hoher Abreinigungsgrad ein. Eine Anpassung der Maschine an die gewünschte Reinigungswirkung bzw. den Säuberungsgrad kann noch dadurch erzielt werden, daß die Umfangsgeschwindigkeiten der Reinigungswalzen 7 und/oder der Werkzeuge 16 einstellbar bzw. Verstellbar gesteuert werden können. Auch die Relativlage der Teile zueinander kann durch eine Vertikal- und/oder Horizontalverstellung der Trägergehäuse 9 relativ zu den Teilen der Beschleunigungseinrichtung 8 erreicht werden.

An den Rodescharen 3, 4 und den Scharstielen 5 können Leitstäbe 22 befestigt sein, die sich um ein gewisses Maß nach hinten bis in den Bereich des Trägergehäuses 9 erstrecken können. Diese Leitstäbe 22, die rechts und links angeordnet sind, bilden Seitenwandungen und fangen solche Rüben 11 auf, die von den Werkzeugen 16 mit einer seitlich wirkenden Kraftkomponente abgeschleudert werden, was hin und wieder, vorkommt. Die Leitstäbe 22 sind ebenso wie die Rodeschare 3, 4 Ortsfest angeordnet. Die Leitstäbe 22 müssen nicht unbedingt an der Rodescharen 3, 4 befestigt sein. Auch eine Anordnung am Maschinenrahmen ist möglich.

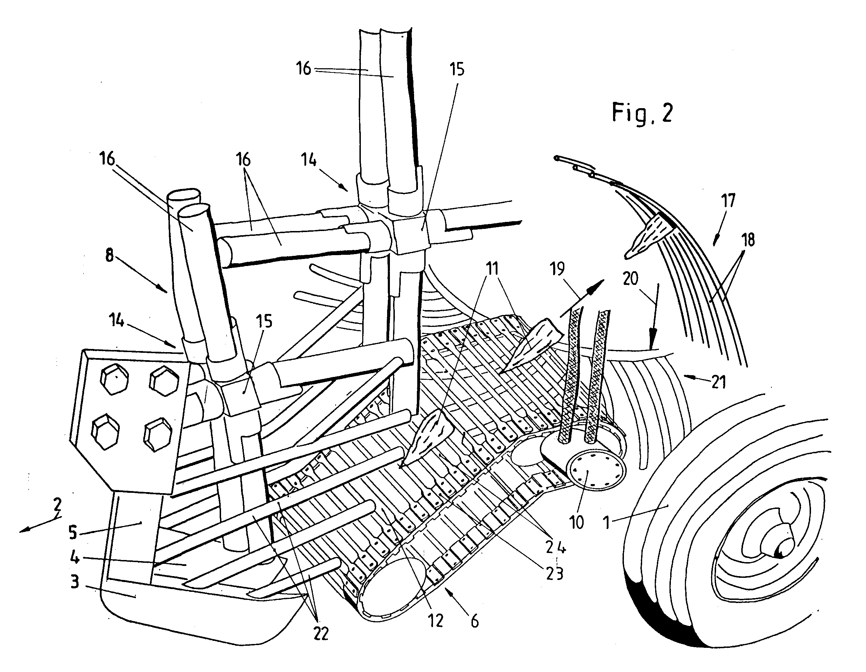

Bei der Ausführungsform nach Figur 2 besteht das angetriebene Reinigungselement, welches der Beschleunigungseinrichtung 8 zugeordnet ist, aus einem kurzen Reinigungsband 23, welches über mindestens zwei Rollen umgelenkt wird, deren Achsen quer zur Arbeitsrichtung gemäß Pfeil 2 angeordnet sind. Mindestens eine der Rollen ist angetrieben, und zwar insbesondere über einen Ölmotor 10. Es können auch mehrere Reinigungsbänder abschnittweise hintereinandergeschaltet vorgesehen sein. Das oder die Reinigungsbänder 23 sind mit Stäben 24 versehen, die auf solchem gegenseitigen Abstand angeordnet sind, daß die Rüben nicht zwischen benachbarten Stäben 24 hindurchfallen können. Die Stäbe 24 können ganz oder teilweise aus Kunststoff bestehen.

**Bezugszeichenliste :**

| | | |
|---|---|---|
| 1 | = | Rad |
| 2 | = | Pfeil |
| 3 | = | Rodeschar |
| 4 | = | Rodeschar |
| 5 | = | Scharstiel |
| 6 | = | Reinigungseinheit |
| 7 | = | Reinigungswalze |
| 8 | = | Beschleunigungseinrichtung |
| 9 | = | Trägergehäuse |
| 10 | = | Ölmotor |
| 11 | = | Rübe |
| 12 | = | Spalt |
| 13 | = | Wendel |
| 14 | = | Rotationskörper |
| 15 | = | Nabe |
| 16 | = | Werkzeug |
| 17 | = | Prallwand |
| 18 | = | Stab |
| 19 | = | Pfeil |
| 20 | = | Pfeil |
| 21 | = | Siebrad |
| 22 | = | Leitstab |
| 23 | = | Reinigungsband |
| 24 | = | Stab |

**Patentansprüche**

1. Maschine zum Ernten von Wurzelfrüchten, insbesondere Zuckerrüben, mit mindestens einem Rodeschar (3, 4) und mit nachgeschalteten, langsam laufend angetriebenen Reinigungselementen, insbesondere Reinigungswalzen (7) oder Reinigungsbändern (23), so daß die vom Rodeschar (3, 4) ausgehobenen Rüben (11) auf den Reinigungselementen von Erde gereinigt und dabei gefördert werden, einer oberhalb der angetriebenen Reinigungselemente (7) angeordneten, schnell laufenden Beschleunigungseinrichtung (8), die den vergleichsweise langsam laufenden Reinigungselementen (7, 23) zugeordnet ist, so daß die auf den Reinigungselementen geförderten Rüben von der Beschleunigungseinrichtung (8) erfaßt und nach hinten abgeschleudert werden, und mit einer über dem Ende der Reinigungselemente oder oberhalb des Bereichs weiterer, sich anschließender Förderelemente (21) angeordneten Prallwand (17), die die von der Beschleunigungseinrichtung (8) abgeschleuderten Rüben (11) auffängt und dabei verzögert, so daß die an den Rüben anhaftende Erde entfernt wird, wobei die Rüben (11) infolge der Wirkung der Beschleunigungseinrichtung (8) im freien Flug auf die Prallwand gelangen.

2. Maschine nach Anspruch 1, dadurch gekennzeichnet, daß die Prallwand (17) aus einzelnen, auf Abstand zueinander angeordneten Stäben (18), die eine gebogene Form aufweisen, zusammengesetzt ist.

3. Maschine nach Anspruch 1 oder 2, dadurch gekennzeichnet, daß die Beschleunigungseinrichtung (8) vorzugsweise mehrere Rotationskörper (14) aufweist, die auf ihrem Umfang mit schlegelnden Werkzeugen (16) aus elastischem Material wie Schaufeln, Rohrabschnitten o. dgl. besetzt sind und deren Achsen quer zur Fahrtrichtung (2) angeordnet sind.

4. Maschine nach Anspruch 1 oder 2, dadurch gekennzeichnet, daß die angetriebenen Achsen der Reinigungswalzen (7) bzw. Reinigungsbänder (23) parallel zueinander und quer zur Fahrtrichtung angeordnet sind.

5. Maschine nach Anspruch 4, dadurch gekennzeichnet, daß zumindest einige der Reinigungswalzen (7) auf ihrem Umfang mit Wendeln (13) versehen sind, die relativ zu der Anordnungsstelle der Beschleunigungseinrichtung (8) so ausgebildet und angeordnet sind, daß sie die ausgehobenen Rüben (11) in den Erfassungsbereich der Beschleunigungseinrichtung (8) leiten.

6. Maschine nach einem der Ansprüche 1 bis 5, dadurch gekennzeichnet, daß die Reinigungselemente (7, 23) aus elastischem Werkstoff, z. B. Gummi, bestehen oder zumindest in ihrer Oberfläche derart ausgebildet sind.

7. Maschine nach Anspruch 4 oder 5, dadurch gekennzeichnet, daß die einzelnen Reinigungswalzen (7) oder Reinigungsbänder mit gegeneinander unterschiedlicher, insbesondere in Förderrichtung (2) steigender Umfangsbeschwindigkeit angetrieben sind.

8. Maschine nach einem oder mehreren der Ansprüche 1 bis 7, dadurch gekennzeichnet, daß die Arbeitsgeschwindigkeit der Rotationskörper (14) der Beschleunigungseinrichtung (8) und/oder die Umfangsgeschwindigkeit der Reinigungselemente (7, 23) einzeln oder gemeinsam einstellbar sind.

9. Maschine nach einem oder mehreren der Ansprüche 1 bis 8, dadurch gekennzeichnet, daß die Reinigungselemente (7, 23) und/oder die Rotationskörper (14) der Beschleunigungseinrichtung (8) mechanisch oder hydraulisch, z. B. durch einen Ölmotor, angetrieben sind.

10. Maschine nach einem oder mehreren der Ansprüche 1 bis 9, dadurch gekennzeichnet, daß die Reinigungselemente (7, 23) in einem Trägergehäuse (9) gelagert sind und diese so gebildete Einheit vertikal und/oder horizontal verstellbar angeordnet ist.

11. Maschine nach Anspruch 8 oder 9, dadurch gekennzeichnet, daß der Antrieb der Rotationskörper (14) der Beschleunigungseinrichtung (8) mit dem Antrieb der Reinigungselemente (7, 23) über eine Getriebestufe gekoppelt ist.

12. Maschine nach einem oder mehreren der Ansprüche 1 bis 11, dadurch gekennzeichnet, daß zumindest ein Teil der Beschleunigungseinrichtung (8) und der Reinigungselemente (7, 23) von durchbrochenen, sich in Fahrtrichtung erstreckenden Seitenwänden (22) umgeben ist.

**Claims**

1. Machine for harvesting root crops, particularly sugar beet, which comprises at least one lifting share (3, 4) followed by cleaning members driven to run at a low speed, particularly cleaning rollers (7) or cleaning belts (23), so that the beets (11) lifted out by the lifting share (3, 4) are freed from soil on the cleaning members and at the same time conveyed, and comprising an accelerating device (8) running at high speed which is disposed above the driven cleaning members (7) and is associated with the cleaning members (7, 23) running comparatively slowly, so that the beets conveyed on the cleaning members are caught by the accelerating device (8) and thrown off towards the rear, and comprising a rebound wall (17) which is disposed over the end of the cleaning members or above the region of additional, adjoining conveyor members (21) and which intercepts the beets (11) thrown off by the accelerating device (8) and thus decelerates them, so that the soil adhering to the beets is removed, the beets (11) reaching the rebound wall in free flight because of the action of the accelerating device (8).

2. Machine according to Claim 1, characterised in that the rebound wall (17) is composed of individual bars (18) which are spaced apart and have a curved shape.

3. Machine according to Claim 1 or 2, characterised in that the accelerating device (8) preferably comprises a plurality of bodies of revolution (14) which are equipped on their periphery with beating tools (16) of elastic material, such as blades, tube portions, or the like and whose axes are disposed transversely to the direction of travel (2).

4. Machine according to Claim 1 or 2, characterised in that the driven axles of the cleaning rollers (7) or cleaning belts (23) are disposed parallel to one another and transversely to the direction of travel.

5. Machine according to Claim 4, characterised in that at least some of the cleaning rollers (7) are provided on their periphery with spirals (13), which in relation to the position where the accelerating device (8) is arranged are so constructed and arranged that they guide the lifted out beets (11) into the reach of the accelerating device (8).

6. Machine according to one of Claims 1 to 5, characterised in that the cleaning members (7, 23) consist of elastic material, for example rubber, or at least on their surface are made of such material.

7. Machine according to Claim 4 or 5, characterised in that the individual cleaning rollers (7) or cleaning belts are driven at different peripheral speeds in relation to one another, particularly at peripheral speeds increasing in the conveying direction (2).

8. Machine according to one or more of Claims 1 to 7, characterised in that the working speed of the bodies of revolution (14) of the accelerating device (8) and/or the peripheral speed of the cleaning members (7, 23) are individually or conjointly adjustable.

9. Machine according to one of more of Claims 1 to 8, characterised in that the cleaning members (7, 23) and/or the bodies of revolution (14) of the accelerating device (8) are driven mechanically or hydraulically, for example by an oil motor.

10. Machine according to one or more of Claims 1 to 9, characterised in that the cleaning members (7, 23) are mounted in a carrier casing (9) and the unit thus formed is arranged to be vertically and/or horizontally adjustable.

11. Machine according to Claim 8 or 9, characterised in that the drive of the bodies of revolution (14) of the accelerating device (8) is coupled by way of a gear stage to the drive of the cleaning members (7, 23).

12. Machine according to one or more of Claims 1 to 11, characterised in that at least a part of the accelerating device (8) and of the cleaning members (7, 23) is surrounded by perforated side walls (22) extending in the direction of travel.

**Revendications**

1. Machine pour récolter des tubercules, en particulier des betteraves à sucre, avec au moins un soc arracheur (3, 4) et avec des éléments nettoyeurs disposés à la suite, entraînés à vitesse lente, en particulier des rouleaux nettoyeurs (7) ou des courroies de nettoyage (23), de telle sorte que les betteraves (11) soulevées par le soc arracheur (3, 4) sont débarrassées de la terre sur les éléments nettoyeurs tout en étant transportées, un dispositif d'accélération (8) tournant rapidement, disposé au-dessus des éléments nettoyeurs entraînés (7), qui est associé aux éléments nettoyeurs (7, 23) tournant lentement, de telle sorte que les betteraves transportées sur les éléments nettoyeurs sont saisies par le dispositif d'accélération (8) et projetées vers l'arrière, et avec une paroi d'impact (17) disposée au-dessus de l'extrémité des éléments nettoyeurs ou au-dessus de la région d'autres éléments transporteurs (21) se raccordant à la suite, laquelle paroi (17) retient les betteraves (11) projetées par le dispositif d'accélération (8) en les ralentissant de telle sorte que la terre adhérant aux betteraves est enlevée, tandis que les betteraves (11) parviennent en vol libre sur la paroi d'impact, par suite de l'action du dispositif d'accération (8).

2. Machine selon la revendication 1, caractérisée en ce que la paroi d'impact (17) est composée de barreaux individuels (18) espacés entre eux, qui présentent une forme incurvée.

3. Machine selon la revendication 1 ou 2, caractérisée en ce que le dispositif d'accélération (8) présente, de préférence, plusieurs corps rotatifs (14) qui sont garnis sur leur pourtour de battoirs (16) en matériau élastique, tels que des palettes, des tronçons de tubes ou autre, et dont les axes sont disposés transversalement au sens de marche (2).

**4.** Machine selon la revendication 1 ou 2, caractérisée en ce que les axes entraînés des rouleaux nettoyeurs (7) ou des courroies de nettoyage (23) sont parallèles entre eux et sont disposés transversalement au sens de marche.

**5.** Machine selon la revendication 4, caractérisée en ce qu'au moins quelques uns des rouleaux nettoyeurs (7) sont munis sur leur pourtour d'hélices (13) qui sont conformées et disposées, par rapport à l'emplacement du dispositif d'accélération (8), de telle sorte qu'ils guident les betteraves (11) soulevées dans la zone de capture du dispositif d'accélération (8).

**6.** Machine selon une des revendications 1 à 5, caractérisée en ce que les éléments nettoyeurs (7, 23) sont en matériau élastique, par exemple en caoutchouc, ou sont tout au moins constitués d'un tel matériau sur leur surface extérieure.

**7.** Machine selon la revendication 4 ou 5, caractérisée en ce que les rouleaux nettoyeurs (7) ou les courroies de nettoyage sont entraînés individuellement à des vitesses différentes, en particulier à des vitesses périphériques qui augmentent dans le sens du transport (2).

**8.** Machine selon une ou plusieurs des revendications 1 à 7, caractérisée en ce que la vitesse de travail des corps rotatifs (14) du dispositif d'accélération (8) et/ou la vitesse périphérique des éléments nettoyeurs (7, 23) sont réglables individuellement ou collectivement.

**9.** Machine selon une ou plusieurs des revendication 1 à 8, caractérisée en ce que les éléments nettoyeurs (7, 23) et/ou les corps rotatifs (14) du dispositif d'accélération sont entraînés mécaniquement ou par voie hydraulique, par exemple au moyen d'un moteur hydraulique.

**10.** Machine selon une ou plusieurs des revendications 1 à 9, caractérisée en ce que les éléments nettoyeurs (7, 23) ont leurs paliers dans un boîtier porteur (9) et en ce que cette unité ainsi constituée est disposée de manière à être réglable verticalement et/ou horizontalement.

**11.** Machine selon la revendication 8 ou 9, caractérisée en ce que l'entraînement des corps rotatifs (14) du dispositif d'accélération (8) est couplé par une transmission avec l'entraînement des éléments nettoyeurs (7, 23).

**12.** Machine selon une ou plusieurs des revendications 1 à 11, caractérisée en ce qu'une partie au moins du dispositif d'accélération (8) et des éléments nettoyeurs (7, 23) est entourée par des parois latérales (22) ajourées, s'étendant dans le sens de marche.

Fig.1

EP 0 346 725 B1

Fig. 2